# EUROPEAN PATENT SPECIFICATION

(11) **EP 2 604 448 B1**
(45) Date of publication and mention of the grant of the patent: **22.03.2017**
(21) Application number: 12195593.4
(22) Date of filing: 05.12.2012
(51) Int. Cl.: B60C 9/00, B60C 17/00, B60C 9/20

(54) **Composite cord and overlay ply for a pneumatic tire**
Verbundstoffcord und Deckschicht für einen Luftreifen
Corde composite et pli de superposition pour pneu

(30) Priority: 13.12.2011 US 201113324204
(43) Date of publication of application: 19.06.2013
(73) Proprietor: The Goodyear Tire & Rubber Company, Akron, OH 44316-0001 (US)
(72) Inventor: Westgate, Walter Kevin, Uniontown, OH Ohio 44685 (US); Gopez, Florencio Lim, Chesterfield, VA Virginia 23832 (US); Love, Nathan Whitney, Richmond, VA Virginia 23225 (US)
(74) Representative: Kutsch, Bernd

(56) References cited:
- EP-A1- 0 329 590
- EP-A1- 1 431 076
- EP-A2- 0 965 463
- EP-A2- 1 745 945
- GB-A- 2 022 033

## Description

### Field of the Invention

The present invention is directed towards a composite cord and towards a pneumatic tire comprising such a composite cord. More specifically, the present invention is directed towards a pneumatic tire wherein an overlay reinforcement layer reduces belt package stiffness of the pneumatic tire.

### Background of the Invention

Some conventional overlays for a pneumatic tire utilize a hybrid cord. The hybrid cord is formed of two different materials: a low initial modulus core yarn and high modulus wrap yarns. The selection of the yarns is such that the "break point" of the cord, i.e. when the slope of the force versus elongation curve changes from a relatively low slope to a relatively high slope, occurs at between 2% and 3% elongation, with an ultimate cord break at just over 5% elongation.

Another conventional overlay utilizes a hybrid cord of aramid and nylon twisted together, wherein the break point of the cord is between 4 % and 6 % elongation, with an ultimate cord break at over 10% elongation. In an overlay, the hoop reinforcing effects of a strong cord are desired. However, the cord must have elongation properties to a degree to permit the tire to expand into a toroidal shape during tire molding and bending stiffness properties to a degree to permit some ride comfort characteristics.

A conventional runflat tire may exhibit bending behavior of tire components to achieve improved comfort and handling performance, and also improved run-flat performance. This runflat pneumatic tire may have a single carcass ply, at least one belt ply disposed radially outward of the carcass ply in a crown portion of the tire, and at least one insert located adjacent the carcass ply in a sidewall portion. The insert may provide support for the pneumatic tire load to enable the tire to operate in underinflated conditions. The carcass ply comprises at least one composite cord formed of at least two first yarns twisted helically about at least one second yarn. The first yarns and the second yarn having different modulus of elasticity, the first yarns having a modulus greater than the modulus of the second yarn. The first and second yarns may be selected from the group of materials of aramid, PK, PBO, rayon, nylon, polyester, PET, and PEN. The first yarns may have a linear density value in the range of 550 to 3300 dtex, while the second yarns may have a linear density value in the range of 940 dtex to 3680 dtex.

EP-A- 1 745 945 describes a composite cord for a runflat tire comprising at least two first yarns twisted helically about at least one second yarn. The first yarn may be aramid or nylon and the second yarn may be aramid or nylon. The first yarn has a linear density in a range of from 550 dtex to 3300 dtex.

EP-A- 0 329 590 describes a composite cord for reinforcing tires comprising three yarns, namely two outer yarns and a single core yarn, all being aramid yarns.

EP-A- 0 965 463 describes a belt reinforcing structure for a pneumatic tire. The belts are reinforced with 420 dtex to 1100 dtex aramid cords twisted together.

GB-A- 2 022 033 describes a radial carcass emergency pneumatic tire wherein the tire may comprise cables having a single core filament about which a single yarn is helically twisted.

### Summary of the Invention

The invention relates to a cord in accordance with claim 1 and to a tire in accordance with claim 10.

The dependent claims refer to preferred embodiments of the invention.

In one preferred aspect of the invention, the pneumatic tire comprises a carcass ply and a belt structure having an overlay ply disposed radially outward of the carcass ply in a crown portion of the tire, the overlay ply comprising at least one composite cord, the cord comprising one aramid first yarn twisted helically about one nylon second yarn, the first yarn having a first modulus of elasticity and the second yarn having a second modulus of elasticity. The first yarn has a linear density value in the range of 500 dtex to 800 dtex and the second yarn has a linear density value in the range of 200 dtex to 800 dtex. The composite cords may have an end count per 2.54 cm in the overlay ply in the range of 10 to 25 (3.9 - 9.8 ends per cm).

In an other preferred aspect of the invention, the pneumatic tire comprises a carcass ply and a belt structure having an overlay ply disposed radially outward of the carcass ply in a crown portion of the tire, the overlay ply comprising at least one composite cord, the cord comprising one aramid first yarn twisted helically about one aramid second yarn, the first yarn having a first modulus of elasticity and the second yarn having a second modulus of elasticity. The first yarn has a linear density value in the range of 500 dtex to 800 dtex. The second yarn has a linear density value in the range of 200 dtex to 800 dtex. The composite cords may have an end count per 2.54 cm in the overlay ply in the range of 10 to 25 (3.9 - 9.8 ends per cm).

### Definitions

"Cord" means one of the reinforcement strands which the reinforcement structures of the tire may comprise.

"Denier" means the weight in grams per 9000 meters (unit for expressing linear density). Dtex means the weight in grams per 10,000 meters.

"Density" means weight per unit length.

"LASE" is load at specified elongation.

"Lay length" means the distance at which a twisted filament or strand travels to make a 360 degree rotation about another filament or strand.

"Ply" means a cord-reinforced layer of rubber-coated radially deployed or otherwise parallel cords.

"Radial" and "radially" are used to mean directions radially toward or away from the axis of rotation of the tire.

"Tenacity" is stress expressed as force per unit linear density of the unstrained specimen (gm/tex or gm/denier). Used in textiles.

"Yarn" is a generic term for a continuous strand of fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Brief Description of the Drawings

The invention will be described by way of example and with reference to the accompanying drawings in which:
FIG. 1 is a cross sectional view of an example tire for use with the present invention; and
FIG. 2 is an example cord construction in accordance with the present invention.

### Detailed Description of Examples of the Present Invention

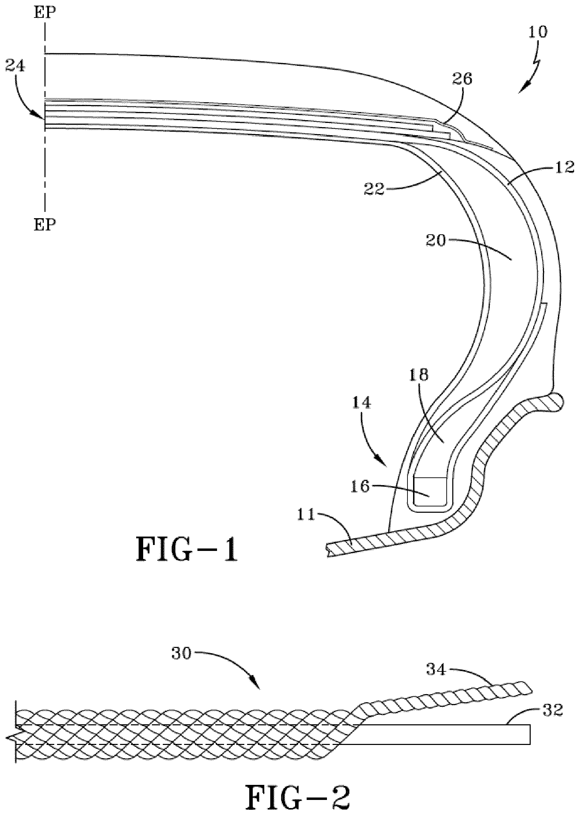

FIG. 1 is a cross-sectional view of an example pneumatic runflat tire 10, mounted on a tire rim 11, designed to be capable of continued operation during under-inflated or deflated conditions. Only one half of the tire 10 is shown, it being understood that, conventionally, the other half is a mirror image of that which is illustrated. The example tire 10 has at least one reinforcing ply 12 extending from one bead area 14 of the tire to an opposing bead area. The ends of the reinforcing ply 12 are turned axially inward to axially outward about bead cores 16 and bead apexes 18. The terminal ends of the reinforcing ply 12 extend past the radially outer ends of the bead apexes 18 enveloping the bead apexes 18.

Located in each sidewall region of the example tire 10 may be a sidewall insert 20. The insert 20 may be located adjacent to the tire innerliner 22 or axially outward of the reinforcing ply 12. The insert 20 may be formed of elastomeric material and may extend from the crown area, preferably from radially inward of the belt structure 24, to radially inward of the outermost terminal end of the bead apexes 18, overlapping the bead apexes 18. The elastomeric material of the insert 20 may be selected to provide the tire with support during underinflated operation of the tire 10.

In the crown area of the example tire 10, a belt structure 24 may be located radially outward of the carcass ply 12. The belt structure 24 may have at least two inclined, crossed cord belt plies and an overlay ply 26. The cords in the belt plies may be inclined with respect to the circumferential direction and the cords in directly adjacent plies may be inclined at similar, but opposing, angles to each other. Outward of the cross cord plies may be the overlay ply 26. The overlay ply 26 may have a width equal or greater than the maximum width of the crossed cord plies, encapsulating the crossed cord plies of the belt structure 24 between the overlay ply 26 and the carcass reinforcing ply 12. The overlay ply 26 is reinforced with cords preferably inclined at angles of 15° or less relative to the equatorial plane (EP) of the example tire 10.

In accordance with the present invention, the overlay ply 26 may be formed from a cord 30, as seen in FIG. 2. To reduce stiffness of the overall belt structure 24, the bending stiffness of the belt structure may be lowered by reducing the gauge, or thickness, of the overlay ply 26. Thus, ride comfort (e.g. during an impact) may be enhanced, in addition to maintaining acoustical performance through the use of merged cord technology. Through the use of an overlay ply 26 in accordance with the present invention, the gauge of the cords 30 may be reduced (e.g., 35% reduction), thereby reducing bending stiffness of the belt structure 24 and enhancing ride comfort without sacrificing other key tire performance parameters (e.g., handling, wear, etc.).

The cord 30 is a composite cord made of filament yarns of appropriate gauge and stress-strain characteristics to provide the example tire 10. The cord 30 is formed of a single first yarn 32 about which is twisted a single second yarn 34. This construction allows the overlay ply 26 and belt structure 24 to have relatively low bending stiffness strain (e.g., enhancing comfort) while not having a negative impact on other performance characteristics of the example tire 10.

Possible reinforcing materials for either the first or second yarns 32, 34 may include, but are not limited to, aramid, polyethylene ketone (PK), polyphenylene-2,6-benzobisoxazole (PBO), rayon, nylon, polyester, polyamide, polyethylene terephthalate (PET), polyethylene napthalate (PEN), and polyvinyl alcohol (PVA). In accordance with the invention, aramid and nylon are used. Particularly, a unique construction of a nylon core yarn 32 with an aramid yarn 34 twisted about the core yarn for the cords 30 of the overlay ply 26 may produce such characteristics (e.g., (500-800 dtex/1 + 350-600 dtex/1)/(400-800)Z + (400-800)Z/(200-800)S). One example construction may be (670 dtex/1 aramid + 470 dtex/1 nylon)/(591Z/394Z/591S) with an end count per 2.524 cm in the overlay ply 26 in the range of 10 to 20 (3.9 to 7.9 ends per cm). Another example construction may be (670 dtex/1 aramid + 470 dtex/1 nylon)/(591Z/591S/591S) with an end
count per 2.54 cm in the overlay ply 26 in the range of 15 to 25 (5.9 to 9.8 ends per cm).

Example materials are aramid or nylon. The final material selection may be based on the specific desired stress/strain characteristics vs. gauge of the cord 30. In the example cord 30, each of the yarns 32, 34 has its component filaments twisted together a given number of turns per unit of length of the yarn 32, 34 (usually expressed in turns per meter (tpm)) and additionally the yarns 32, 34 are twisted together a given number of turns per unit of length of the cord 30. The direction of twist refers to the direction of slope of the spirals of a yarn or cord when it is held vertically. If the slope of the spirals conform in direction to the slope of the letter "S", then the twist is called "S", or "left hand". If the slope of the spirals conform in direction to the slope of the letter "Z", then the twist is called "Z", or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.

As stated above, an overlay ply 26 of hybrid cords 30 in accordance with the present invention produces excellent comfort performance in a tire 10 as well as allowing a reduction in ply gauge without sacrificing performance. This overlay ply 26 thus enhances the performance of the tire 10, even though the complexities of the structure and behavior of the pneumatic tire are such that no complete and satisfactory theory has been propounded.

## Claims

1. A composite cord for use in a pneumatic tire, the cord (30) consisting of one aramid or nylon first yarn (34) twisted helically about one nylon or aramid second yarn (32), wherein the first yarn has a linear density in a range of from 500 dtex to 800 dtex and wherein the second yarn has a linear density in a range of from 200 dtex to 800 dtex.

2. The cord of claim 1 wherein the second yarn (32) has a linear density in a range of from 350 dtex to 600 dtex.

3. The cord of one of the previous claims wherein the second yarn (32) has a linear density in a range of from 440 dtex to 500 dtex or of 470 dtex.

4. The cord of one of the previous claims wherein the first yarn (34) has a linear density in a range of from 640 dtex to 700 dtex or of 670 dtex.

5. The cord of at least one of the previous claims wherein the first yarn (34) has a yarn twist in a range of from 350 to 800 turns per meter and/or the second yarn (32) has a yarn twist in a range of from 350 to 800 turns per meter.

6. The cord of claim 5 wherein the yarn twist directions of the first and second yarns (32, 34) are the same, preferably Z-direction.

7. The cord of at least one of the previous claims wherein the cord (30) has cord twist or overall twist in a range of from 200 to 800 turns per meter, preferably with a S-twist direction.

8. The cord of at least one of the previous claims wherein:
(i) the first yarn (34) has a yarn twist in a range of from 700 to 800 turns per meter or 748 turns per meter, and the second yarn (32) has a yarn twist in a range of from 700 to 800 turns per meter or 748 turns per meter, and the cord twist is in a range of from 550 to 650 turns per meter or 591 turns per meter; or
(ii) the first yarn (34) has a yarn twist in a range of from 350 to 450 turns per meter or 394 turns per meter, and the second yarn (32) has a yarn twist in a range of from 550 to 650 turns per meter or 591 turns per meter, and the cord twist is in a range of from 550 to 650 turns per meter or 591 turns per meter; or
(iii) the first yarn (34) has a yarn twist in a range of from 550 to 650 turns per meter or 591 turns per meter, and the second yarn (32) has a yarn twist in a range of from 550 to 650 turns per meter or 591 turns per meter, and the cord twist is in a range of from 550 to 650 turns per meter or 591 turns per meter.

9. The cord of at least one of the previous claims wherein the first yarn (34) has a first modulus of elasticity and the second yarn (32) has a second modulus of elasticity, the first modulus being different from the second modulus of elasticity, preferably at least 30% different.

10. A pneumatic tire comprising a composite cord (30) in accordance with at least one of the previous claims in at least one ply (26) of the tire (10).

11. The tire of claim 10 wherein the tire (10) comprises a carcass ply (12) and a belt structure (24) having an overlay ply (26) disposed radially outward of the carcass ply (12) in a crown portion of the tire (10), and wherein the overlay ply (26) comprises the composite cord (30).

12. The tire of claim 10 or 11 wherein the composite cord (30) in the ply has an end count per 2.54 cm in a range of from 10 to 25.

13. The tire of claim 12 wherein the end count per 2.54 cm is in a range of from 15 to 25.

14. The tire of one of the claims 10 to 13 wherein the tire is a runflat tire.

## Patentansprüche

1. Verbundwerkstoffkord zur Anwendung in einem Luftreifen, wobei der Kord (30) aus einem ersten Aramid- oder Nylongarn (34), das schraubenförmig um ein zweites Nylon- oder Aramidgarn (32) verdrillt ist, besteht, wobei das erste Garn eine lineare Dichte im Bereich von 500 dtex bis 800 dtex aufweist und wobei das zweite Garn eine lineare Dichte im Bereich von 200 dtex bis 800 dtex aufweist.

2. Kord nach Anspruch 1, wobei das zweite Garn (32) eine lineare Dichte im Bereich von 350 dtex bis 600 dtex aufweist.

3. Kord nach einem der vorhergehenden Ansprüche, wobei das zweite Garn (32) eine lineare Dichte im Bereich von 440 dtex bis 500 dtex oder von 470 dtex aufweist.

4. Kord nach einem der vorhergehenden Ansprüche, wobei das erste Garn (34) eine lineare Dichte im Bereich von 640 dtex bis 700 dtex oder von 670 dtex aufweist.

5. Kord nach mindestens einem der vorhergehenden Ansprüche, wobei das erste Garn (34) eine Garndrehung im Bereich von 350 bis 800 Drehungen pro Meter aufweist und/oder das zweite Garn (32) eine Garndrehung im Bereich von 350 bis 800 Drehungen pro Meter aufweist.

6. Kord nach Anspruch 5, wobei die Garndrehrichtungen des ersten und des zweiten Garns (32, 34) dieselben sind, bevorzugt Z-Richtung.

7. Kord nach mindestens einem der vorhergehenden Ansprüche, wobei der Kord (30) eine Korddrehung oder Gesamtdrehung im Bereich von 200 bis 800 Drehungen pro Meter aufweist, bevorzugt mit einer S-Drehrichtung.

8. Kord nach mindestens einem der vorhergehenden Ansprüche, wobei:
(i) das erste Garn (34) eine Garndrehung im Bereich von 700 bis 800 Drehungen pro Meter oder 748 Drehungen pro Meter aufweist und das zweite Garn (32) eine Garndrehung im Bereich von 700 bis 800 Drehungen pro Meter oder 748 Drehungen pro Meter aufweist, und die Korddrehung im Bereich von 550 bis 650 Drehungen pro Meter liegt oder 591 Drehungen pro Meter beträgt; oder
(ii) das erste Garn (34) eine Garndrehung im Bereich von 350 bis 450 Drehungen pro Meter oder 394 Drehungen pro Meter aufweist und das zweite Garn (32) eine Garndrehung im Bereich von 550 bis 650 Drehungen pro Meter oder 591 Drehungen pro Meter aufweist, und die Korddrehung im Bereich von 550 bis 650 Drehungen pro Meter liegt oder 591 Drehungen pro Meter beträgt; oder
(iii) das erste Garn (34) eine Garndrehung im Bereich von 550 bis 650 Drehungen pro Meter oder 591 Drehungen pro Meter aufweist und das zweite Garn (32) eine Garndrehung im Bereich von 550 bis 650 Drehungen pro Meter oder 591 Drehungen pro Meter aufweist, und die Korddrehung im Bereich von 550 bis 650 Drehungen pro Meter liegt oder 591 Drehungen pro Meter beträgt.

9. Kord nach mindestens einem der vorhergehenden Ansprüche, wobei das erste Garn (34) einen ersten Elastizitätsmodul aufweist und das zweite Garn (32) einen zweiten Elastizitätsmodul aufweist, wobei der erste Modul verschieden von dem zweiten Elastizitätsmodul ist, bevorzugt mindestens 30% verschieden.

10. Luftreifen, umfassend einen Verbundwerkstoffkord (30) gemäß mindestens einem der vorhergehenden Ansprüche in mindestens einer Lage (26) des Reifens (10).

11. Reifen nach Anspruch 10, wobei der Reifen (10) eine Karkassenlage (12) und eine Gürtelstruktur (24) mit einer Gürteldecklage (26) radial auswärts von der Karkassenlage (12) in einem Zenitbereich des Reifens (10) angeordnet umfasst, und wobei die Gürteldecklage (26) den Verbundwerkstoffkord (30) umfasst.

12. Reifen nach Anspruch 10 oder 11, wobei der Verbundwerkstoffkord (30) in der Lage eine Endenzahl je 2,54 cm im Bereich von 10 bis 25 aufweist.

13. Reifen nach Anspruch 12, wobei die Endenzahl je 2,54 cm im Bereich von 15 bis 25 liegt.

14. Reifen nach einem der Ansprüche 10 bis 13, wobei der Reifen ein Reifen mit Notlaufeigenschaften ist.

## Revendications

1. Câblé composite pour son utilisation dans un bandage pneumatique, le câblé (30) étant constitué d'un premier fil d'aramide ou de nylon (34) torsadé en direction hélicoïdale autour d'un deuxième fil (32) en nylon ou en aramide, le premier fil possédant une densité linéaire dans la plage de 500 dtex à 800 dtex, et dans lequel le deuxième fil possède une densité linéaire dans la plage de 200 dtex à 800 dtex.

2. Câblé selon la revendication 1, dans lequel le deuxième fil (32) possède une densité linéaire dans la plage de 350 dtex à 600 dtex.

3. Câblé selon l'une quelconque des revendications précédentes, dans lequel le deuxième fil (32) possède une densité linéaire dans la plage de 440 dtex à 500 dtex ou de 470 dtex.

4. Câblé selon l'une quelconque des revendications précédentes, dans lequel le premier fil (34) possède une densité linéaire dans la plage de 640 dtex à 700 dtex ou de 670 dtex.

5. Câblé selon au moins une des revendications précédentes, dans lequel le premier fil (34) possède une torsion de fil dans la plage de 350 à 800 spires par mètre et/ou le deuxième fil (32) possède une torsion de fil dans la plage de 350 à 800 spires par mètre.

6. Câblé selon la revendication 5, dans lequel les directions de torsion du premier et du deuxième fil (32, 34) sont identiques, de préférence dans la direction Z.

7. Câblé selon l'une quelconque des revendications précédentes, dans lequel le câblé (30) possède une torsion de câblé ou une torsion globale dans la plage de 200 à 800 spires par mètre, de préférence dans une direction de torsion S.

8. Câblé selon au moins une des revendications précédentes, dans lequel :
(i) le premier fil (34) possède une torsion de fil dans la plage de 700 à 800 spires par mètre ou s'élevant à 748 spires par mètre, et le deuxième fil (32) possède une torsion de fil dans la plage de 700 à 800 spires par mètre ou s'élevant à 748 spires par mètre ; et la torsion du câblé se situe dans la plage de 550 à 650 spires par mètre ou s'élève à 591 spires par mètre ;
(ii) le premier fil (34) possède une torsion de fil dans la plage de 350 à 450 spires par mètre ou s'élevant à 349 spires par mètre, et le deuxième fil (32) possède une torsion de fil dans la plage de 550 à 650 spires par mètre ou s'élevant à 591 spires par mètre ; et la torsion du câblé se situe dans la plage de 550 à 650 spires par mètre ou s'élève à 591 spires par mètre ;
(iii) le premier fil (34) possède une torsion de fil dans la plage de 550 à 650 spires par mètre ou s'élevant à 591 spires par mètre, et le deuxième fil (32) possède une torsion de fil dans la plage de 550 à 650 spires par mètre ou s'élevant à 591 spires par mètre ; et la torsion du câblé se situe dans la plage de 550 à 650 spires par mètre ou s'élève à 591 spires par mètre.

9. Câblé selon au moins une des revendications précédentes, dans lequel le premier fil (34) possède un premier module d'élasticité et le deuxième fil (32) possède un deuxième module d'élasticité, le premier module étant différent du deuxième module d'élasticité, de préférence différent à concurrence d'au moins 30 %.

10. Bandage pneumatique comprenant un câblé composite (30) selon au moins une des revendications précédentes dans au moins une nappe (26) du bandage pneumatique (10).

11. Bandage pneumatique selon la revendication 10, dans lequel le bandage pneumatique (10) comprend une nappe de carcasse (12) et une structure de ceinture (24) possédant une nappe de recouvrement (26) disposée en direction radiale à l'extérieur de la nappe de carcasse (12) dans une portion de sommet du bandage pneumatique (10), et dans lequel la nappe de recouvrement (26) comprend le câblé composite (30).

12. Bandage pneumatique selon la revendication 10 ou 11, dans lequel le câblé composite (30) dans la nappe possède un nombre de bouts par 2,54 cm dans la plage de 10 à 25.

13. Bandage pneumatique selon la revendication 12, dans lequel le nombre de bouts par 2,54 cm se situe dans la plage de 15 à 25.

14. Bandage pneumatique selon une des revendications 10 à 13, dans lequel le bandage pneumatique est un bandage pneumatique qui permet de rouler à plat.
